# EUROPEAN PATENT SPECIFICATION

(11) **EP 4 560 156 B1**
(45) Date of publication and mention of the grant of the patent: **04.11.2026**
(21) Application number: 23867275.2
(22) Date of filing: 04.09.2023
(51) Int. Cl.: F16C 11/04, H04M 1/02, G06F 1/16

(54) **FOLDING ELECTRONIC APPARATUS**
KLAPPBARE ELEKTRONISCHE VORRICHTUNG
APPAREIL ÉLECTRONIQUE PLIABLE

(30) Priority: 22.09.2022 CN 202211158747
(43) Date of publication of application: 28.05.2025
(73) Proprietor: Honor Device Co., Ltd., Shenzhen, Guangdong 518040 (CN)
(72) Inventor: GUO, Renwei, Shenzhen, Guangdong 518040 (CN)
(74) Representative: Thun, Clemens
(86) International application number: PCT/CN2023/116849
(87) International publication number: WO 2024/060984

(56) References cited:
- WO-A1-2022/120711
- CN-A- 111 352 536
- CN-A- 111 818 200
- CN-A- 114 658 753
- CN-U- 212 208 239
- US-A1- 2019 208 649
- US-A1- 2021 357 000
- US-A1- 2021 368 032

## Description

This application claims priority to Chinese Patent Application CN 117 780 772 A (Application No. 202211158747.0), filed with the China National Intellectual Property Administration on September 22, 2022 and entitled "FOLDABLE ELECTRONIC DEVICE".

### TECHNICAL FIELD

This application relates to the field of electronic product technologies, and in particular, to a foldable electronic device.

### BACKGROUND

With continuous development of electronic devices such as a mobile phone and a tablet computer, displays of the electronic devices are increasingly large. The electronic devices may have flexible displays, so that the electronic devices are foldable and have larger displays.

In a related technology, a foldable electronic device may include two middle frames and a foldable structure. The two middle frames are connected to each other through the foldable structure to implement rotating fit, so that the two middle frames can rotate relative to each other, and the two middle frames can be superposed or unfolded.

However, a size of the foldable structure is large, limiting an overall thickness of the foldable electronic device.

US 2019/208649 A1 discloses a foldable display device including adjustable support units to support a display panel of the foldable display device together with an inner surface of set frames in the unfolded state. The adjustable support units are connected to a hinge unit to enable the adjustable support units to retreat to the inner surface of the set frames in the folded state. In the unfolded state, the adjustable support units and the set frames support the entire area of the display panel to be flat.

WO 2022/120711 A1 discloses a display device comprising a first support member, a second support member, a flexible display module and a gap formed between the second support member and the first support member.

US 2021/357000 A1 discloses a rotatable connector assembly including a base and two connector members respectively connected to two sides of the base. Each of the connector members includes a first hinge and a second hinge, and both sides of the base are provided with a first sliding slot. An end of the first hinge is slidably connected to the first sliding slot and rotates with respect to the base, and the other end of the first hinge is hinged to one end of the second hinge.

### SUMMARY

Embodiments of this application provide a foldable electronic device. An overall thickness of the foldable electronic device can be reduced. The invention is defined in the independent claim. Additional features of the invention are provided in the dependent claims. In the following, parts of the description and drawings referring to embodiments, which are not covered by the claims, are not presented as embodiments of the invention but as examples useful for understanding the invention.

An embodiment of this application provides a foldable electronic device, including a flexible display, a foldable apparatus, and two middle frames. The foldable apparatus includes a support door panel and two swing arms. The two swing arms are respectively rotatably connected to two opposite sides of the support door panel. The middle frame is correspondingly connected to the swing arm, and a side that is of the middle frame and that faces the swing arm has an arc-shaped portion.

The flexible display covers the support door panel, each swing arm, and each middle frame, and both the middle frame and the swing arm rotate relative to the support door panel, so that the flexible display is folded or unfolded.

When folded, the flexible display opposite to the arc-shaped portion, the support door panel, and each swing arm is bent, to form a water-drop-shaped portion, and surfaces that face the water-drop-shaped portion and that are of the arc-shaped portion, the support door panel, and each swing arm match corresponding positions of an outer surface of the water-drop-shaped portion.

In this application, the arc-shaped portion is disposed on the side that is of the middle frame and that faces the swing arm, and the outer surface of the water-drop-shaped portion is avoided through the arc-shaped portion, so that the water-drop-shaped portion is located in an accommodating cavity formed by the arc-shaped portion, the support door panel, and each swing arm. In this application, because the arc-shaped portion is added to the accommodating cavity, a length of the support door panel and the swing arms can be reduced, that is, an overall length of the foldable apparatus is reduced. When an overall size of the foldable apparatus is reduced, an overall thickness of the foldable electronic device after being folded can be reduced.

In a possible implementation, according to the foldable electronic device provided in this embodiment of this application, the middle frame has a middle frame inner surface, and the middle frame inner surface faces the flexible display.

The middle frame inner surface includes a middle frame support surface, a middle frame arc-shaped surface, and a middle frame connection surface that are sequentially disposed, where the middle frame arc-shaped surface forms the arc-shaped portion, and the middle frame connection surface is connected to the swing arm. In this way, the middle frame support surface, the middle frame arc-shaped surface, and the middle frame connection surface are conveniently processed.

In a possible implementation, according to the foldable electronic device provided in this embodiment of this application, a support stand is provided on the middle frame inner surface, the support stand has a support surface and a support side surface located on a side of the support surface, and the support surface forms the middle frame connection surface. In this way, it is convenient to process the middle frame support surface, the middle frame arc-shaped surface, and the middle frame connection surface.

In a possible implementation, according to the foldable electronic device provided in this embodiment of this application, the support side surface is in an arc shape, to form the middle frame arc-shaped surface.

In a possible implementation, according to the foldable electronic device provided in this embodiment of this application, the middle frame includes a middle frame body and a support plate, the middle frame body has a mounting groove, and the support plate is covered on the middle frame body, to close at least a part of the mounting groove. The mounting groove provides a mounting space for components such as a battery and a circuit board of the foldable electronic device. The support plate is covered on the middle frame body, and the flexible display is supported by the support plate, to improve compression resistance performance of a position that is of the flexible display and that corresponds to the mounting groove.

In a possible implementation, according to the foldable electronic device provided in this embodiment of this application, a side that is of the support plate and that is away from the middle frame body forms the middle frame support surface.

The support side surface is in an arc shape, to form the middle frame arc-shaped surface.

In a possible implementation, according to the foldable electronic device provided in this embodiment of this application, the support plate has an arc-shaped bent portion, a side that is of the support plate and that is away from the middle frame body forms the middle frame support surface, and a side that is of the bent portion and that is away from the middle frame body forms the middle frame arc-shaped surface.

In a possible implementation, according to the foldable electronic device provided in this embodiment of this application, the bent portion is covered on the support side surface. Therefore, the bent portion is supported by the support side surface of the support stand.

In a possible implementation, according to the foldable electronic device provided in this embodiment of this application, the support side surface is an arc shape matching the bent portion. In this way, the support side surface of the support stand has good stability for supporting the bent portion.

In a possible implementation, according to the foldable electronic device provided in this embodiment of this application, the support plate is a steel sheet. In this application, the flexible display is supported by the steel sheet, so that support strength of the support plate is ensured, and the thickness of the foldable electronic device is not affected.

In a possible implementation, according to the foldable electronic device provided in this embodiment of this application, the support plate is rotatably connected to the middle frame body, and the bent portion is lapped onto the swing arm.

The swing arm moves relative to the middle frame connection surface, to change a shape of an arc surface enclosed by the middle frame arc-shaped surface and the swing arm. That is, relative positions of the swing arm and the middle frame connection surface change, thereby changing the shape of the arc surface enclosed by the middle frame arc-shaped surface and the swing arm.

In a possible implementation, the foldable electronic device provided in this embodiment of this application further includes a first rotation shaft. The support plate is rotatably connected to the middle frame body through the first rotation shaft, the first rotation shaft faces an end that is of the support plate and that is away from the bent portion, and the first rotation shaft is fixed relative to the middle frame body. The support plate is rotatably connected to the middle frame body through the first rotation shaft, so that the support plate rotates relative to the middle frame body. In this way, a structure is simple, and costs are reduced.

In a possible implementation, the foldable electronic device provided in this embodiment of this application further includes a second rotation shaft. The swing arm is rotatably connected to the middle frame connection surface through the second rotation shaft, and the second rotation shaft is fixed relative to the middle frame body. The swing arm is rotatably connected to the middle frame connection surface through the second rotation shaft, so that the swing arm rotates relative to the middle frame body. In this way, the structure is simple, and costs are reduced.

In a possible implementation, according to the foldable electronic device provided in this embodiment of this application, a side that is of the swing arm and that faces the middle frame connection surface has a mounting portion, the second rotation shaft is inserted into the mounting portion, the middle frame connection surface has an accommodating groove, the mounting portion is located in the accommodating groove, and the mounting portion rotates relative to the accommodating groove. In this application, the mounting portion is disposed, to provide a mounting space for the second rotation shaft, and the accommodating groove is disposed, to guide and limit rotation of the mounting portion.

In a possible implementation, according to the foldable electronic device provided in this embodiment of this application, the accommodating groove is in an arc shape, and the mounting portion matches the accommodating groove.

In a possible implementation, according to the foldable electronic device provided in this embodiment of this application, the middle frame connection surface has a limiting groove, and an end that is of the swing arm and that faces the bent portion may be embedded into the limiting groove. The swing arm rotates into the limiting groove, and the swing arm stops rotating, so that a rotation angle of the swing arm is limited through the limiting groove.

In a possible implementation, according to the foldable electronic device provided in this embodiment of this application, the swing arm includes a sliding swing arm segment and an auxiliary swing arm segment, the sliding swing arm segment is slidably connected to the auxiliary swing arm segment, the sliding swing arm segment is lapped on the middle frame connection surface, and the auxiliary swing arm segment is rotatably connected to the support door panel. When the sliding swing arm segment and the auxiliary swing arm segment slide relative to each other, the sliding swing arm segment moves toward the support plate, thereby changing a shape of an arc surface enclosed by the middle frame arc-shaped surface and the sliding swing arm segment.

In a possible implementation, according to the foldable electronic device provided in this embodiment of this application, the sliding swing arm segment has two connection bases, and the two connection bases are respectively located on two opposite sides of the auxiliary swing arm segment.

The sliding swing arm segment further includes a connection shaft, the auxiliary swing arm segment has a sliding groove, the connection shaft is inserted into the sliding groove, and two ends that are of the connection shaft and that are located outside the sliding groove are respectively inserted into the two connection bases. In this application, the auxiliary swing arm segment drives the connection shaft to slide in the sliding groove, to guide sliding of the auxiliary swing arm segment through the sliding groove.

In a possible implementation, according to the foldable electronic device provided in this embodiment of this application, a side that is of the sliding swing arm segment and that faces the bent portion has an inclined surface segment, and the bent portion is lapped onto the inclined surface segment. In this way, during rotation of the support plate, the bent portion moves in an inclined direction of the inclined surface segment, to change a shape of an arc surface enclosed by the middle frame arc-shaped surface and a swing arm arc-shaped surface of the swing arm.

In a possible implementation, according to the foldable electronic device provided in this embodiment of this application, the support door panel has at least two arc-shaped sliding grooves, the at least two arc-shaped sliding grooves are respectively located on two opposite sides of the support door panel, the swing arm has at least one sliding portion, the sliding portion is in an arc shape matching the arc-shaped sliding groove, the sliding portion is inserted into the arc-shaped sliding groove, and the sliding portion rotates relative to the arc-shaped sliding groove, so that the swing arm rotates relative to the support door panel.

### BRIEF DESCRIPTION OF DRAWINGS

FIG. 1 is a diagram 1 of a structure of a foldable electronic device in an intermediate state in a related technology;
FIG. 2 is a diagram 1 of a structure of a foldable electronic device in a folded state in a related technology;
FIG. 3 is a diagram 2 of a structure of a foldable electronic device in an intermediate state in a related technology;
FIG. 4 is a diagram 2 of a structure of a foldable electronic device in a folded state in a related technology;
FIG. 5 is an exploded view of an unfolded state of FIG. 4;
FIG. 6 is a principle diagram of a part of a foldable electronic device in a folded state in a related technology;
FIG. 7 is a principle diagram of a part of a foldable electronic device in an unfolded state in a related technology;
FIG. 8 is a diagram of a structure of a foldable electronic device according to an embodiment of this application;
FIG. 9 is a partial enlarged view of A in FIG. 8;
FIG. 10 is a diagram of a partial structure in FIG. 9 in an unfolded state;
FIG. 11 is a principle diagram of a foldable electronic device in a folded state according to an embodiment of this application;
FIG. 12 is a principle diagram of a foldable electronic device in an unfolded state according to an embodiment of this application;
FIG. 13 is a diagram of comparison between FIG. 7 and FIG. 12;
FIG. 14 is a diagram 1 of a partial structure of a foldable electronic device in an unfolded state according to an embodiment of this application;
FIG. 15 is a diagram 2 of a partial structure of a foldable electronic device in an unfolded state according to an embodiment of this application;
FIG. 16 is a diagram 3 of a partial structure of a foldable electronic device in an unfolded state according to an embodiment of this application;
FIG. 17 is a diagram 1 of a structure of a middle frame body and a first rotation shaft in FIG. 16;
FIG. 18 is a diagram 2 of a structure of a middle frame body and a first rotation shaft in FIG. 16;
FIG. 19 is a diagram of a structure in FIG. 16 in a folded state;
FIG. 20 is a principle diagram of FIG. 19;
FIG. 21 is a diagram 1 of relative positions of a middle frame body, a support plate, and a swing arm in FIG. 16;
FIG. 22 is a diagram 2 of relative positions of a middle frame body, a support plate, and a swing arm in FIG. 16;
FIG. 23 is a diagram 4 of a partial structure of a foldable electronic device in an unfolded state according to an embodiment of this application;
FIG. 24 is a diagram of a structure in FIG. 23 in a folded state;
FIG. 25 is a principle diagram of FIG. 24;
FIG. 26 is a diagram of a structure of a sliding swing arm segment in FIG. 23;
FIG. 27 is a diagram 1 of relative positions of a middle frame body, a support plate, and a swing arm in FIG. 23;
FIG. 28 is a diagram 2 of relative positions of a middle frame body, a support plate, and a swing arm in FIG. 23;
FIG. 29 is a diagram 1 of a structure of a swing arm in FIG. 10;
FIG. 30 is a diagram 2 of a structure of a swing arm in FIG. 10;
FIG. 31 is a diagram 3 of a structure of a swing arm in FIG. 10;
FIG. 32 is a diagram 4 of a structure of a swing arm in FIG. 10;
FIG. 33 is a diagram 5 of a structure of a swing arm in FIG. 10; and
FIG. 34 is a diagram 6 of a structure of a swing arm in FIG. 10.

Description of reference numerals in the accompanying drawings:
1: foldable mobile phone;
10: first middle frame; 11: first middle plate; 12: first side frame;
20: second middle frame; 21: second middle plate; 22: second side frame;
30: foldable structure; 31: door panel; 32: swing arm;
40: rear cover;
50: flexible display; 51: water-drop-shaped region;
60: accommodating space;
100: flexible display; 110: water-drop-shaped portion; 110a: arc-shaped bottom surface; 110b: arc-shaped side surface; 110c: arc-shaped neck surface;
200: foldable apparatus;
210: support door panel; 211: arc-shaped sliding groove; 212: first substrate; 2121: arc-shaped protrusion; 2122: accommodating hole; 213: second substrate; 2131: arc-shaped groove; 214: door panel body; 215: space block; 216: cover plate; 217: connector;
220: swing arm; 220a: left swing arm; 220b: right swing arm; 221: sliding portion; 222: connection surface; 223: mounting portion; 224: sliding swing arm segment; 2241: connection base; 2242: inclined surface segment; 2243: swing arm arc-shaped surface; 225: auxiliary swing arm segment; 2251: sliding groove;
300: middle frame;
310: arc-shaped portion;
320: middle frame inner surface; 321: middle frame support surface; 3211: groove; 322: middle frame connection surface; 3221: accommodating groove; 3222: limiting groove; 323: support stand;
330-middle frame body; 331: mounting groove; 332: support base; 333: side frame;
340: support plate; 341: bent portion; 342: protrusion;
400: accommodating cavity;
500: first rotation shaft;
600: second rotation shaft;
700: connection shaft.

### DESCRIPTION OF EMBODIMENTS

Terms used in implementations in this application are merely intended to explain specific embodiments of this application rather than being intended to limit this application.

A foldable electronic device provided in embodiments of this application may include, but is not limited to, a foldable fixed or mobile terminal such as a mobile phone, a tablet computer, a notebook computer, an ultra-mobile personal computer (ultra-mobile personal computer, UMPC), a handheld computer, a touchscreen television, a walkie-talkie, a netbook, a POS terminal, a personal digital assistant (personal digital assistant, PDA), a wearable device, or a virtual reality device.

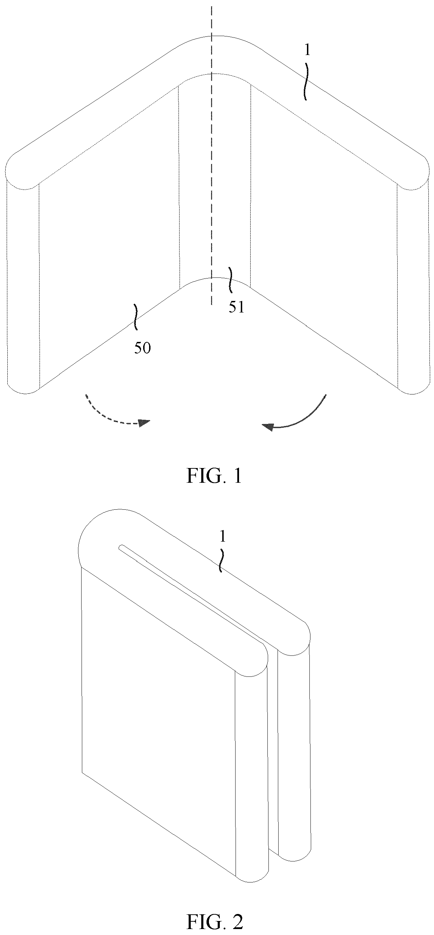

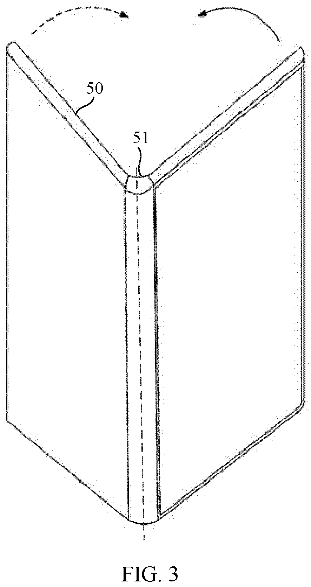

As shown in FIG. 1 to FIG. 4, in embodiments of this application, an example in which the foldable electronic device is a foldable mobile phone 1 is used for description. The foldable mobile phone 1 may be a foldable mobile phone with an outward-folding display. Alternatively, the foldable mobile phone 1 may be a foldable mobile phone 1 with an inward-folding display (as shown in FIG. 1 and FIG. 3). Alternatively, the foldable mobile phone 1 may be a foldable mobile phone with an inward-folding display and an additional outer display. The following uses the foldable mobile phone 1 with an inward-folding display as an example for description.

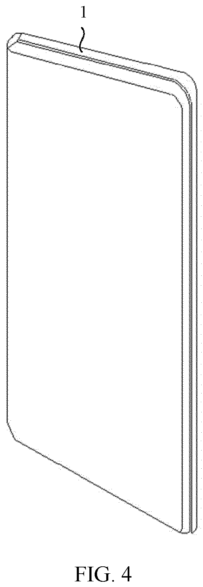

It should be noted that, in an intermediate state of a foldable electronic device shown in FIG. 1 and FIG. 3, a side corresponding to a dashed arrow is folded toward a side corresponding to a solid arrow. Therefore, a folded state of the foldable electronic device shown in FIG. 2 and FIG. 4 is formed.

As shown in FIG. 3 to FIG. 5, in a related technology, the foldable mobile phone 1 may include a first middle frame 10, a second middle frame 20, and a foldable structure 30. The first middle frame 10 and the second middle frame 20 are connected through the foldable structure 30 to implement rotating fit, so that the first middle frame 10 and the second middle frame 20 can rotate relative to each other (that is, the first middle frame 10 and the second middle frame 20 are folded relative to each other), thereby enabling the first middle frame 10 and the second middle frame 20 to be superposed or unfolded.

It may be understood that the foldable mobile phone 1 further includes a rear cover 40 and a foldable flexible display 50. The rear cover 40 and the foldable flexible display 50 may be respectively laid on surfaces of two opposite sides of the first middle frame 10, the second middle frame 20, and the foldable structure 30.

As shown in FIG. 3 to FIG. 6, the first middle frame 10 may include a first middle plate 11 and a first side frame 12, and the first side frame 12 encloses three adjacent peripheral edges of the first middle plate 11. The second middle frame 20 may include a second middle plate 21 and a second side frame 22, and the second side frame 22 encloses three adjacent peripheral edges of the second middle plate 21. The foldable structure 30 may include a door panel 31 and two swing arms 32. The two swing arms 32 are respectively rotatably connected to two sides of the door panel 31. The two swing arms 32 are respectively connected to a side on which no first side frame 12 is disposed of the first middle plate 11 and a side on which no second side frame 22 is disposed of the second middle plate 21.

When the first middle frame 10 and the second middle frame 20 are folded relative to each other, the flexible display 50 is adhered to the first middle frame 10 and the second middle frame 20, and a part of the flexible display 50 corresponding to the foldable structure 30 is bent. The bent part of the flexible display 50 forms a water-drop-shaped region 51, the door panel 31 and the two swing arms 32 jointly enclose an accommodating space 60, and the water-drop-shaped region 51 is located in the accommodating space 60. When the first middle frame 10 and the second middle frame 20 are unfolded relative to each other, the flexible display 50 is also unfolded correspondingly.

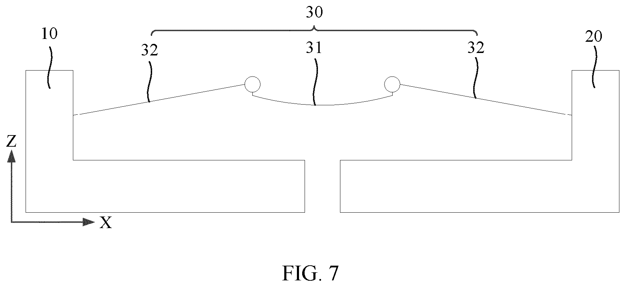

A bent position (for example, the water-drop-shaped region 51) of the part of the flexible display 50 is prone to being damaged due to impact. The water-drop-shaped region 51 can be protected by the accommodating space 60. As shown in FIG. 3 and FIG. 7, a length of the swing arm 32 in the foldable structure 30 in an X direction in FIG. 7 is long, affecting an overall size of the foldable structure 30, which limits an overall thickness of the foldable mobile phone 1, and increases the thickness of the foldable mobile phone 1.

Based on this, an embodiment of this application provides a foldable electronic device. Because an outer surface of a water-drop-shaped portion is in an arc shape, an arc-shaped portion is disposed on a side that is of a middle frame and that faces a swing arm, and the outer surface of the water-drop-shaped portion is avoided through the arc-shaped portion, so that the water-drop-shaped portion is located in an accommodating cavity formed by the arc-shaped portion, a support door panel, and each swing arm. In this application, because the arc-shaped portion is added to the accommodating cavity, a length of the support door panel and the swing arms can be reduced, that is, an overall length of a foldable apparatus is reduced. When an overall size of the foldable apparatus is reduced, an overall thickness of the foldable electronic device after being folded can be reduced.

The following describes a foldable electronic device provided in embodiments of this application with reference to the accompanying drawings.

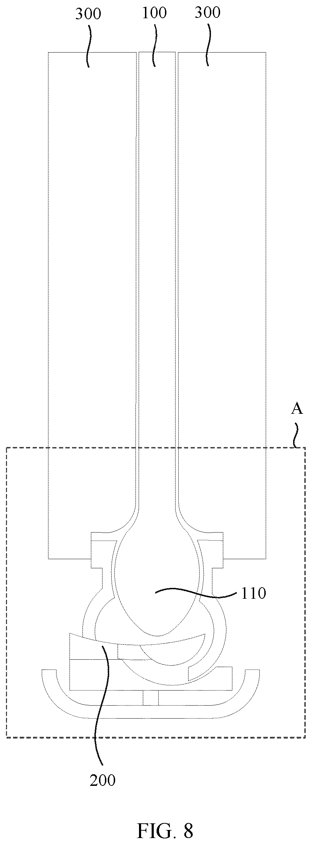

As shown in FIG. 8 to FIG. 10, the foldable electronic device provided in embodiments of this application includes a flexible display 100, a foldable apparatus 200, and two middle frames 300. The foldable apparatus 200 includes a support door panel 210 and two swing arms 220. The two swing arms 220 are respectively rotatably connected to two opposite sides of the support door panel 210. The middle frame 300 is correspondingly connected to the swing arm 220, and a side that is of the middle frame 300 and that faces the swing arm 220 has an arc-shaped portion 310.

The flexible display 100 covers the support door panel 210, each swing arm 220, and each middle frame 300, and both the middle frame 300 and the swing arm 220 rotate relative to the support door panel 210, so that the flexible display 100 is folded or unfolded.

When folded, the flexible display 100 opposite to the support door panel 210 and each swing arm 220 is bent, to form a water-drop-shaped portion 110, and surfaces that face the water-drop-shaped portion 110 and that are of the arc-shaped portion 310, the support door panel 210, and each swing arm 220 match corresponding positions of an outer surface of the water-drop-shaped portion 110.

In embodiments of this application, as shown in FIG. 8 to FIG. 10, the foldable electronic device includes a first direction X, a second direction Y, and a third direction Z, where the first direction X, the second direction Y, and the third direction Z are perpendicular to each other. The first direction is a length direction of the foldable electronic device, the second direction is a width direction of the foldable electronic device, and the third direction is a thickness direction of the foldable electronic device. A length, a width, and a thickness in embodiments of this application are merely for ease of description, and do not mean any limitation to a size. For example, the length may be greater than, equal to, or less than the width. It may be understood that the width direction, the length direction, and the thickness direction of the foldable electronic device may be a width direction, a length direction, and a thickness direction of the foldable apparatus 200.

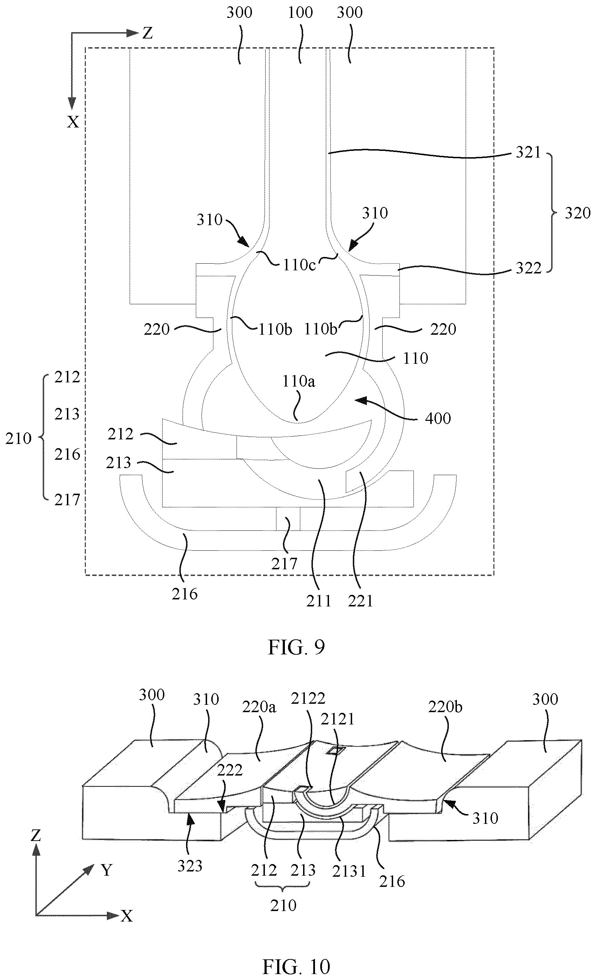

In this application, there may be one, two, or more foldable apparatuses 200. When there are two or more foldable apparatuses 200, the foldable apparatuses 200 may be uniformly spaced apart in the second direction Y in FIG. 10. Two adjacent foldable apparatuses 200 may be connected through a linkage rod. Therefore, the foldable apparatuses 200 are synchronously folded or unfolded.

The two swing arms 220 may include a left swing arm 220a and a right swing arm 220b. The left swing arm 220a is rotatably connected to a left side of the support door panel 210 in FIG. 10, and the right swing arm 220b is rotatably connected to a right side of the support door panel 210 in FIG. 10. Both a manner in which the left swing arm 220a is rotatably connected to the support door panel 210 and a manner in which the right swing arm 220b is rotatably connected to the support door panel 210 may be connection through a rotation shaft or another rotatable connection structure. This is not limited in this application.

One of the two middle frames 300 is connected to each left swing arm 220a, and the other is connected to each right swing arm 220b. During specific implementation, one middle frame 300 may be fixedly connected to each left swing arm 220a in a manner such as bonding or screw connection, and the other middle frame 300 may also be fixedly connected to each right swing arm 220b in a manner such as bonding or screw connection. Therefore, one middle frame 300 and each left swing arm 220a synchronously rotate relative to the support door panel 210, and the other middle frame 300 and each right swing arm 220b synchronously rotate relative to the support door panel 210.

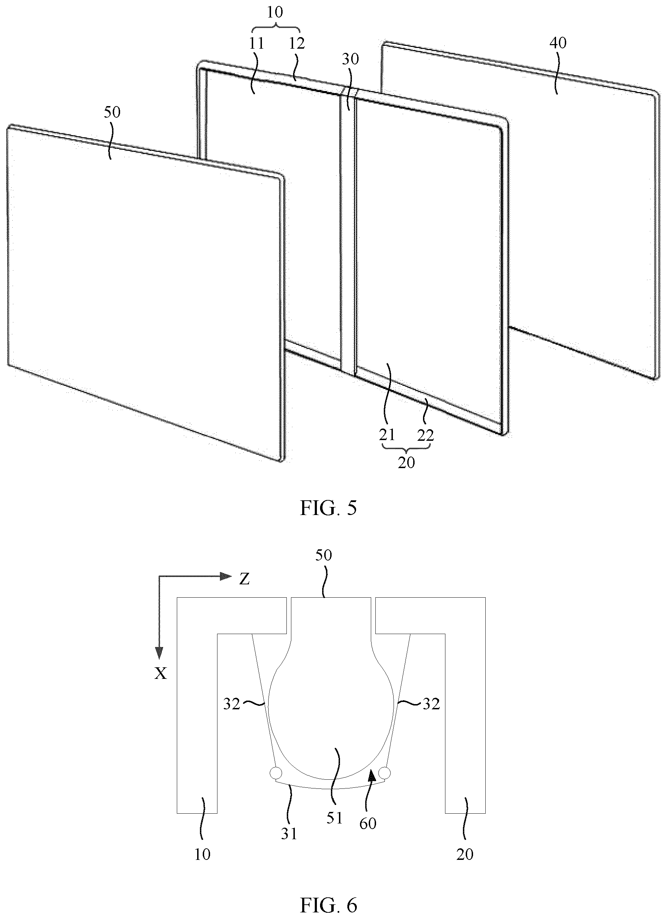

It should be noted that a structure of the middle frame 300 may be the same as that of the first middle frame 10 and the second middle frame 20 in the related technology in FIG. 5. The left swing arm 220a and the right swing arm 220b in the middle frame 300 and the foldable apparatus 200 may be the same as connection positions between the first middle frame 10 and the foldable structure 30 and between the second middle frame 20 and the foldable structure 30 in the related technology in FIG. 5. This is not limited in this embodiment herein.

The two middle frames 300 rotate relative to each other. For example, when the two middle frames 300 are unfolded relative to each other, the two middle frames 300 respectively drive the left swing arm 220a and the right swing arm 220b to be unfolded relative to each other. Because the flexible display 100 covers the support door panel 210, each swing arm 220, and each middle frame 300, the flexible display 100 may also be unfolded. When the foldable electronic device is in a fully unfolded state, the flexible display 100, each swing arm 220, and each middle frame 300 are all in an open state. For example, the flexible display 100, each swing arm 220, and each middle frame 300 may be approximately 180°.

When the two middle frames 300 are folded relative to each other, the two middle frames 300 drive each swing arm 220 and the flexible display 100 to be folded relative to each other. When the foldable electronic device is in a folded state, the flexible display 100, each swing arm 220, and each middle frame 300 are all folded to a closed state.

When the flexible display 100 is folded, a central region of the flexible display 100 is bent, to form the water-drop-shaped portion 110. An outer surface of the water-drop-shaped portion 110 is a continuous arc-shaped surface. The continuous arc-shaped surface may include an arc-shaped bottom surface 110a, an arc-shaped side surface 110b, and an arc-shaped neck surface 110c. There are two arc-shaped side surfaces 110b and two arc-shaped neck surfaces 110c. The two arc-shaped side surfaces 110b are respectively disposed on two opposite sides of the arc-shaped bottom surface 110a, and are in a smooth transition with the arc-shaped bottom surface 110a. The arc-shaped side surface 110b and the arc-shaped neck surface 110c are disposed in a one-to-one correspondence, and the arc-shaped side surface 110b is in a smooth transition with the arc-shaped neck surface 110c. Both the two arc-shaped side surfaces 110b and the two arc-shaped neck surfaces 110c are symmetrically disposed relative to the arc-shaped bottom surface 110a.

The arc-shaped portion 310, the support door panel 210, and each swing arm 220 form an accommodating cavity 400, and the water-drop-shaped portion 110 is accommodated by the accommodating cavity 400. Different parts of the outer surface of the water-drop-shaped portion 110 respectively face the arc-shaped portion 310, the support door panel 210, and each swing arm 220. The support door panel 210 faces the arc-shaped bottom surface 110a, each swing arm 220 faces a part of the arc-shaped side surface 110b, and a part of the arc-shaped portion 310 faces the arc-shaped neck surface 110c. In addition, the support door panel 210 matches the arc-shaped bottom surface 110a, each swing arm 220 matches the part of the arc-shaped side surface 110b, and the part of the arc-shaped portion 310 matches the arc-shaped neck surface 110c. In this way, the middle frame 300 and the swing arm 220 can be closer to the water-drop-shaped portion 110, thereby reducing a thickness of the foldable apparatus 200 after being folded.

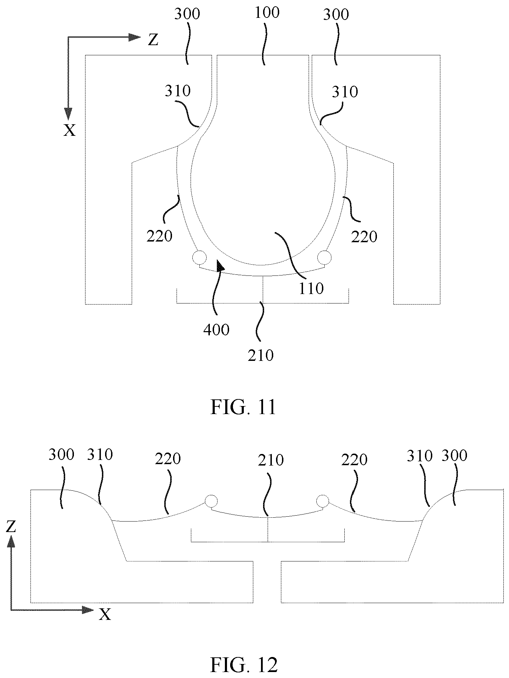

In the related technology shown in FIG. 6 and FIG. 7, the water-drop-shaped region 51 is located in the accommodating space 60 formed by the door panel 31, the first middle frame 10, and the second middle frame 20. Therefore, a long length of the foldable structure 30 is required. In other words, a length of the door panel 31, the first middle frame 10, and the second middle frame 20 is long (the length is the length in the first direction X in FIG. 7). In this way, the entire water-drop-shaped region 51 can be located in the accommodating space 60. However, in this application, as shown in FIG. 11 and FIG. 12, because the outer surface of the water-drop-shaped portion 110 is in an arc shape, the arc-shaped portion 310 is disposed on the side that is of the middle frame 300 and that faces the swing arm 220, and the outer surface of the water-drop-shaped portion 110 is avoided through the arc-shaped portion 310, so that the water-drop-shaped portion 110 is located in the accommodating cavity 400 formed by the arc-shaped portion 310, the support door panel 210, and each swing arm 220. When shapes and sizes of the water-drop-shaped region 51 and the water-drop-shaped portion 110 are the same, in this application, because the arc-shaped portion 310 is added to the accommodating cavity 400, a length of the support door panel 210 and the swing arms 220 can be reduced (the length is the length in the first direction X in FIG. 12), that is, an overall length of the foldable apparatus 200 is reduced.

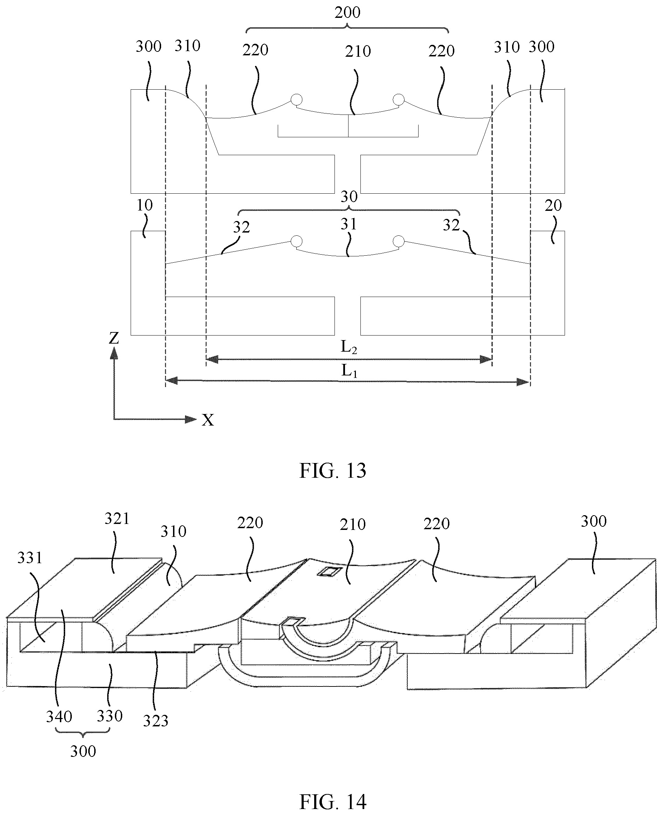

As shown in FIG. 13, L1 is a length of the foldable structure 30 formed by the door panel 31, the first middle frame 10, and the second middle frame 20 in the related technology. L2 is a length of the foldable apparatus 200 formed by the support door panel 210 and the swing arms 220 in this application. It can be seen that L1 is longer than L2. That is, in this application, the support door panel 210 and/or the swing arms 220 are narrowed, so that the overall size of the foldable apparatus 200 can be reduced. Therefore, a size chain of the foldable apparatus 200 in the first direction X in FIG. 13 can be reduced. In this way, at least one of sizes of the support door panel 210, each swing arm 220, and the rotatable connection structure of the support door panel 210 and each swing arm 220 in the foldable apparatus 200 can be reduced. Therefore, the overall size of the foldable apparatus 200 can be reduced. When the overall size of the foldable apparatus 200 is reduced, the overall thickness of the foldable electronic device after being folded can be reduced.

It may be understood that the overall size of the foldable apparatus 200 may be reduced by reducing at least one of the sizes of the support door panel 210, each swing arm 220, and the rotatable connection structure of the support door panel 210 and each swing arm 220. FIG. 13 illustrates a reduction in the size of the swing arm 220 in the first direction X.

It should be noted that the structures described in embodiments of this application do not constitute specific limitations on the foldable electronic device. In some other embodiments of this application, the foldable electronic device may include more or fewer components than those shown in the figure, some components may be combined, some components may be split, or a different component deployment may be used. For example, the foldable electronic device may further include devices such as a battery, cameras (for example, a front-facing camera and a rear-facing camera), and a flash.

As shown in FIG. 9 and FIG. 10, in this application, the middle frame 300 has a middle frame inner surface 320, and the middle frame inner surface 320 faces the flexible display 100. The middle frame inner surface 320 includes a middle frame support surface 321, a middle frame arc-shaped surface, and a middle frame connection surface 322 that are sequentially disposed. The middle frame support surface 321 is configured to support a part of the flexible display 100 other than the water-drop-shaped portion 110, the middle frame arc-shaped surface forms the arc-shaped portion 310, and the middle frame connection surface 322 is connected to the swing arm 220. The middle frame arc-shaped surface is disposed to form the arc-shaped portion 310, thereby facilitating processing of the arc-shaped portion 310.

The swing arm 220 may be fixedly connected to the middle frame connection surface 322 in a connection manner such as screw connection, bonding, soldering, or riveting.

A possible forming manner of the arc-shaped portion 310 on the middle frame 300 is described below with reference to the structure of the middle frame 300.

As shown in FIG. 9 and FIG. 10, in an embodiment, the middle frame inner surface 320 has a support stand 323, the support stand 323 has a support surface and a support side surface located on a side of the support surface, the support surface forms the middle frame connection surface 322, and the support side surface is in an arc shape, to form the middle frame arc-shaped surface (for example, the arc-shaped portion 310).

Specifically, the support stand 323 is processed at a position that is of the middle frame inner surface 320 and that faces the water-drop-shaped portion 110. For example, the support stand 323 may be a step. A step surface of the step forms the middle frame connection surface 322, and a side surface of the step adjacent to the step surface is in an arc shape, to form the middle frame arc-shaped surface. The swing arm 220 has a connection surface 222. The connection surface 222 is adhered to the middle frame connection surface 322, and the connection surface 222 matches the middle frame connection surface 322. For example, the connection surface 222 and the middle frame connection surface 322 are planes that are parallel to each other. Therefore, it is convenient to connect the swing arm 220 to the middle frame connection surface 322, and stability of the connection between the swing arm 220 and the middle frame connection surface 322 is improved. An area of the connection surface 222 may be greater than an area of the middle frame connection surface 322.

That is, the middle frame support surface 321 and the middle frame connection surface 322 are in a step shape. For example, the middle frame support surface 321 and the middle frame connection surface 322 are two step surfaces that are parallel to each other. The middle frame arc-shaped surface is located between the middle frame support surface 321 and the middle frame connection surface 322, and connects the middle frame support surface 321 and the middle frame connection surface 322. In this way, it is convenient to process the middle frame support surface 321, the middle frame arc-shaped surface, and the middle frame connection surface 322.

As shown in FIG. 14, in another embodiment, the middle frame 300 includes a middle frame body 330 and a support plate 340, the middle frame body 330 has a mounting groove 331, and the support plate 340 is covered on the middle frame body 330, to close at least a part of the mounting groove 331.

Components such as a battery and a circuit board of the foldable electronic device may be disposed in the mounting groove 331, and the mounting groove 331 provides a mounting space for the foregoing components.

In this embodiment, the mounting groove 331 for mounting the components such as the battery and the circuit board is disposed, which results in poor compression resistance performance of a position that is of the flexible display 100 and that corresponds to the mounting groove 331. Therefore, the support plate 340 is covered on the middle frame body 330, and the flexible display 100 is supported by the support plate 340, to improve the compression resistance performance of the position that is of the flexible display 100 and that corresponds to the mounting groove 331.

A size of the support plate 340 may be equal to or slightly smaller than a size of the middle frame body 330, so that the support plate 340 closes a part or all of the mounting groove 331, thereby protecting the components such as the battery and the circuit board in the mounting groove 331.

During specific implementation, the support plate 340 may be a plane, and a side that is of the middle frame body 330 and that faces the support plate 340 is a plane parallel to the support plate 340. The support plate 340 may be fixedly connected to the side that is of the middle frame body 330 and that faces the support plate 340, thereby avoiding relative movement between the middle frame body 330 and the support plate 340. For example, the support plate 340 may be bonded to or connected to the side that is of the middle frame body 330 and that faces the support plate 340 by using a screw.

In this application, a side that is of the support plate 340 and that is away from the middle frame body 330 forms the middle frame support surface 321, and the support side surface of the support stand 323 is in an arc shape, to form the middle frame arc-shaped surface (for example, the arc-shaped portion 310). In this embodiment and the foregoing embodiment in FIG. 10, the middle frame support surface 321 has a different structure, the arc-shaped portion 310 has a same structure, and the middle frame connection surface 322 has a same structure.

The support plate 340 may be a steel sheet. At a same thickness, material strength of the steel sheet is higher than that of plastic. The flexible display 100 is supported by the steel sheet, so that support strength of the support plate 340 is ensured, and the thickness of the foldable electronic device is not affected.

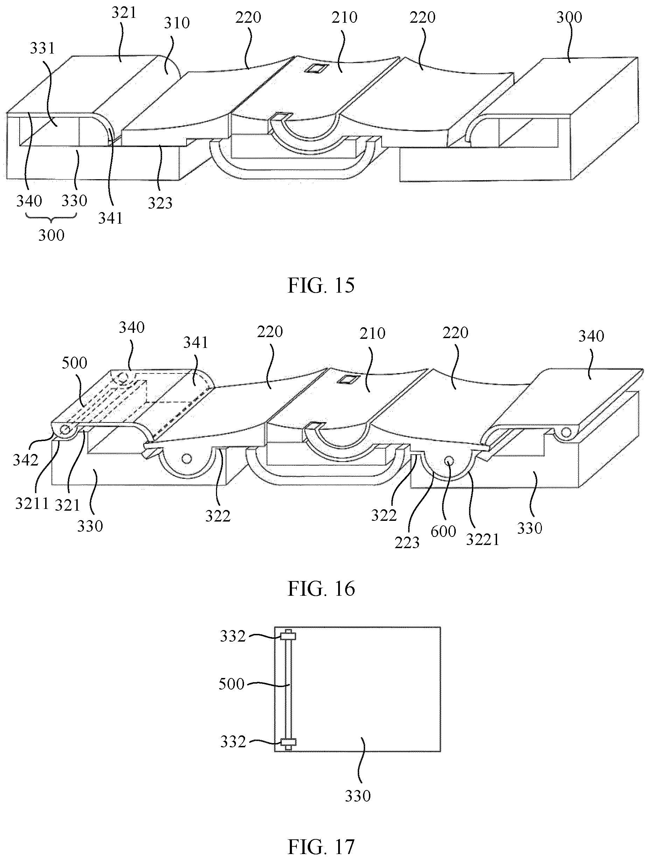

As shown in FIG. 15, in some embodiments, the support plate 340 has an arc-shaped bent portion 341, a side that is of the support plate 340 and that is away from the middle frame body 330 forms the middle frame support surface 321, and a side that is of the bent portion 341 and that is away from the middle frame body 330 forms the middle frame arc-shaped surface (for example, the arc-shaped portion 310). In other words, the middle frame support surface 321 and the middle frame arc-shaped surface are formed through a same component. In this embodiment and the foregoing embodiment in FIG. 14, the arc-shaped portion 310 has a different structure, the middle frame support surface 321 has a same structure, and the middle frame connection surface 322 has a same structure.

In this embodiment, the bent portion 341 is covered on the support side surface. The bent portion 341 is supported by the support side surface of the support stand 323.

The support side surface of the support stand 323 is in an arc shape matching the bent portion 341. That is, when the bent portion 341 covers the support side surface, the bent portion 341 may be adhered to the support side surface of the support stand 323. In this way, the support side surface of the support stand 323 has good stability for supporting the bent portion 341. In addition, when the bent portion 341 is adhered to the support side surface of the support stand 323, the bent portion 341 may be connected to the support side surface of the support stand 323 by bonding. Therefore, it is convenient to connect the bent portion 341 and the support side surface of the support stand 323.

In the foregoing embodiments shown in FIG. 9, FIG. 10, FIG. 14, and FIG. 15, the middle frame 300 and the swing arm 220 are fixed relative to each other, and a shape of an arc surface enclosed by the arc-shaped portion 310 and the swing arm 220 is fixed. However, due to bendable performance and stretchable performance of the flexible display 100, after the flexible display 100 is bent each time, there may be some deviations in a shape of the water-drop-shaped portion 110 (for example, a shape of a rounded corner of the outer surface of the water-drop-shaped portion 110), and it is difficult to keep the shape consistent. In some embodiments, the shape of the arc surface enclosed by the arc-shaped portion 310 and the swing arm 220 may be adjusted, to adjust contact states between the arc-shaped portion 310 and the water-drop-shaped portion 110 and between the swing arm 220 and the water-drop-shaped portion 110, so that the arc-shaped portion 310 keeps in contact with the water-drop-shaped portion 110, and the swing arm 220 keeps in contact with the water-drop-shaped portion 110. In this way, the shape of the water-drop-shaped portion 110 may be adjusted through the arc-shaped portion 310 and the swing arm 220.

A manner in which the shape of the arc surface enclosed by the arc-shaped portion 310 and the swing arm 220 may be adjusted is described below with reference to structures of the middle frame 300 and the swing arm 220.

As shown in FIG. 16, in some embodiments, the support plate 340 is rotatably connected to the middle frame body 330, and the bent portion 341 is lapped onto the swing arm 220. The swing arm 220 moves relative to the middle frame connection surface 322, to change a shape of an arc surface enclosed by the middle frame arc-shaped surface and the swing arm 220.

A manner in which the swing arm 220 moves relative to the middle frame connection surface 322 may be rotation or movement. That is, as shown in FIG. 16, the swing arm 220 may rotate relative to the middle frame connection surface 322. The swing arm 220 may also move relative to the middle frame connection surface 322. The swing arm 220 moves relative to the middle frame connection surface 322, and relative positions of the swing arm 220 and the middle frame connection surface 322 change, thereby changing the shape of the arc surface enclosed by the middle frame arc-shaped surface and the swing arm 220.

To implement rotation of the swing arm 220 relative to the middle frame connection surface 322, the support plate 340 is rotatably connected to the middle frame body 330 through a first rotation shaft 500. The first rotation shaft 500 faces an end that is of the support plate 340 and that is away from the bent portion 341, and the first rotation shaft 500 is fixed relative to the middle frame body 330. The support plate 340 is rotatably connected to the middle frame body 330 through the first rotation shaft 500, so that the support plate 340 rotates relative to the middle frame body 330. In this way, a structure is simple, and costs are reduced.

As shown in FIG. 16 and FIG. 17, two support bases 332 may be disposed on the middle frame body 330, and the first rotation shaft 500 is inserted into the two support bases 332, so that the first rotation shaft 500 is fixed relative to the middle frame body 330. One end of the first rotation shaft 500 sequentially passes through one support base 332, the support plate 340, and the other support base 332, to rotatably connect the support plate 340 to the middle frame body 330.

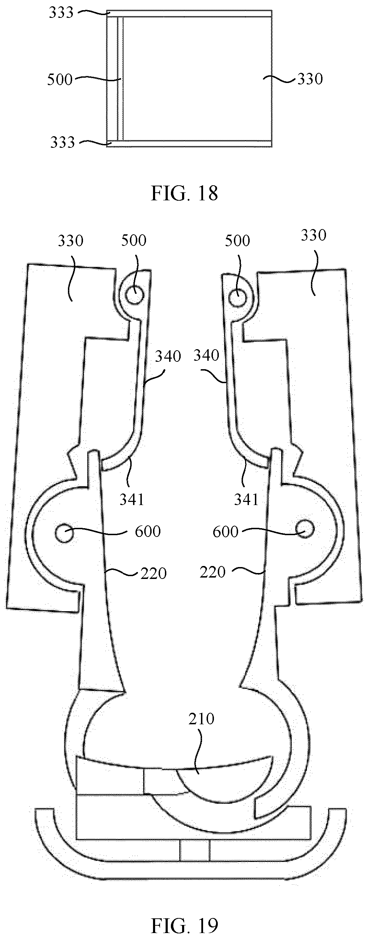

As shown in FIG. 16 and FIG. 18, side frames 333 may be disposed on both opposite sides of the middle frame body 330, and the first rotation shaft 500 is inserted into the two side frames 333, so that the first rotation shaft 500 is fixed relative to the middle frame body 330. One end of the first rotation shaft 500 sequentially passes through one side frame 333, the support plate 340, and the other side frame 333, to rotatably connect the support plate 340 to the middle frame body 330.

It may be understood that the support plate 340 is alternatively rotatably connected to the middle frame body 330 through a hinge and a plurality of first rotation shafts 500 that are coaxially disposed. This is not limited in this application.

As shown in FIG. 16, in some embodiments, a groove 3211 may be disposed on the middle frame support surface 321, and a protrusion 342 is disposed on a side that is of the support plate 340 and that faces the middle frame support surface 321. Both the groove 3211 and the protrusion 342 are in an arc shape, the groove 3211 matches the protrusion 342, and the protrusion 342 rotates relative to the groove 3211, thereby guiding and limiting rotation of the protrusion 342 through the groove 3211.

As shown in FIG. 16 and FIG. 19, the swing arm 220 is rotatably connected to the middle frame connection surface 322 through a second rotation shaft 600. The second rotation shaft 600 is fixed relative to the middle frame body 330. The swing arm 220 is rotatably connected to the middle frame connection surface 322 through the second rotation shaft 600, so that the swing arm 220 rotates relative to the middle frame body 330. In this way, the structure is simple, and costs are reduced.

A manner in which the second rotation shaft 600 is fixed relative to the middle frame body 330 may be similar to a manner in which the first rotation shaft 500 is fixed relative to the middle frame body 330 in the foregoing embodiment. Refer to the foregoing embodiment. Details are not described herein again.

In this embodiment, a side that is of the swing arm 220 and that faces the middle frame connection surface 322 has a mounting portion 223, the second rotation shaft 600 is inserted into the mounting portion 223, the middle frame connection surface 322 has an accommodating groove 3221, the mounting portion 223 is located in the accommodating groove 3221, and the mounting portion 223 rotates relative to the accommodating groove 3221. The mounting portion 223 is disposed, to provide a mounting space for the second rotation shaft 600, and the accommodating groove 3221 is disposed, to guide and limit rotation of the mounting portion 223.

The accommodating groove 3221 is in an arc shape, and the mounting portion 223 matches the accommodating groove 3221. That is, the mounting portion 223 is also in an arc shape, and a radian of an outer surface of the mounting portion 223 is the same as a radian of an inner surface of the accommodating groove 3221.

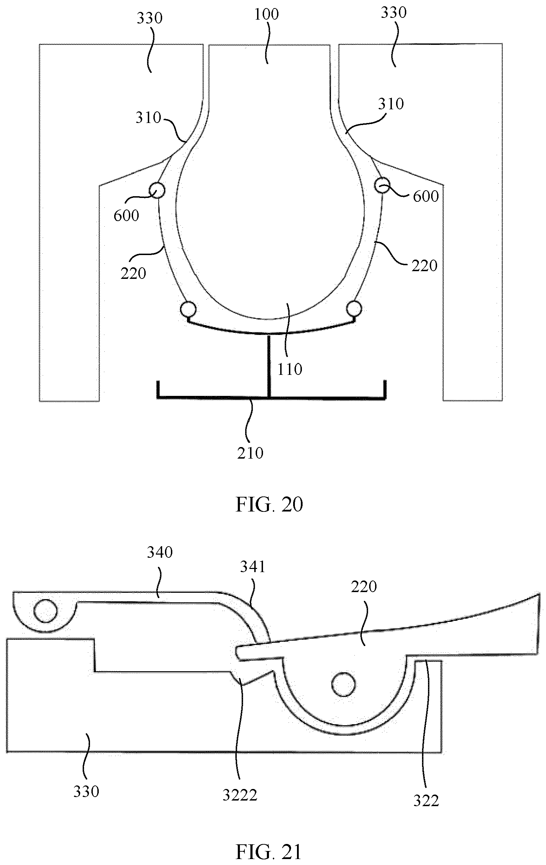

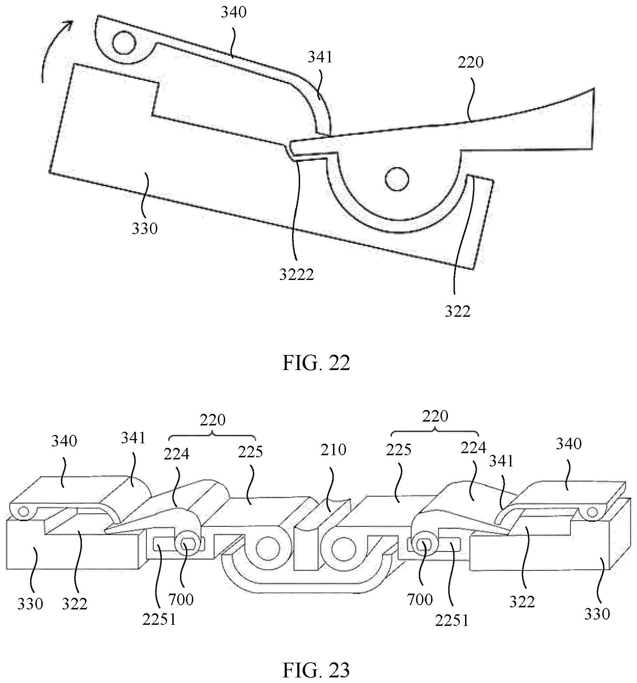

As shown in FIG. 16, and FIG. 18 to FIG. 22, in some embodiments, the middle frame connection surface 322 has a limiting groove 3222, and an end that is of the swing arm 220 and that faces the bent portion 341 may be embedded into the limiting groove 3222. That is, as shown in FIG. 21, a position at which the support plate 340 is lapped onto the swing arm 220 corresponds to the limiting groove 3222. When the foldable electronic device is folded in an arrow direction in FIG. 22, the water-drop-shaped portion 110 applies a force to the swing arm 220, so that the swing arm 220 rotates relative to the middle frame body 330. The end that is of the swing arm 220 and that faces the bent portion 341 rotates toward the limiting groove 3222, the swing arm 220 rotates into the limiting groove 3222, and the swing arm 220 stops rotating, so that a rotation angle of the swing arm 220 is limited through the limiting groove 3222.

The water-drop-shaped portion 110 applies a force to the support plate 340, so that the support plate 340 rotates relative to the middle frame connection surface 322. The bent portion 341 may move on the swing arm 220, to change a position at which the bent portion 341 is lapped onto the swing arm 220, thereby changing the shape of the arc surface enclosed by the middle frame arc-shaped surface and the swing arm 220.

A manner in which the swing arm 220 rotates relative to the middle frame connection surface 322 is described in the foregoing embodiments. The manner in which the swing arm 220 moves relative to the middle frame connection surface 322 is described below.

As shown in FIG. 23 to FIG. 25, in some embodiments, the swing arm 220 includes a sliding swing arm segment 224 and an auxiliary swing arm segment 225, the sliding swing arm segment 224 is slidably connected to the auxiliary swing arm segment 225, the sliding swing arm segment 224 is lapped onto the middle frame connection surface 322, and the auxiliary swing arm segment 225 is rotatably connected to the support door panel 210.

During folding, the water-drop-shaped portion 110 applies a force to the sliding swing arm segment 224, so that the sliding swing arm segment 224 moves toward the support plate 340, thereby changing a shape of an arc surface enclosed by the middle frame arc-shaped surface and the sliding swing arm segment 224. During unfolding, the middle frame connection surface 322 of the middle frame body 330 applies a force to the sliding swing arm segment 224, so that the sliding swing arm segment 224 moves toward the auxiliary swing arm segment 225.

The support door panel 210 may include a door panel body 214 and a space block 215. The space block 215 has an arc surface matching the water-drop-shaped portion 110. In addition, the two swing arms 220 may be separated through the space block 215. The auxiliary swing arm segment 225 is rotatably connected to the door panel body 214.

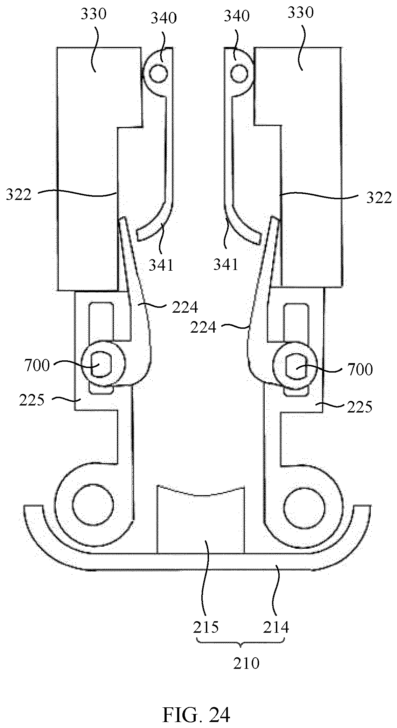

It should be noted that, in the embodiments shown in FIG. 23 and FIG. 24, a manner in which the auxiliary swing arm segment 225 is rotatably connected to the door panel body 214 and a manner in which the support plate 340 is rotatably connected to the middle frame body 330 are similar to a manner in which the support plate 340 is rotatably connected to the middle frame body 330 in the foregoing embodiments shown in FIG. 16 and FIG. 17. Refer to the embodiments shown in FIG. 16 and FIG. 17. Details are not described herein again.

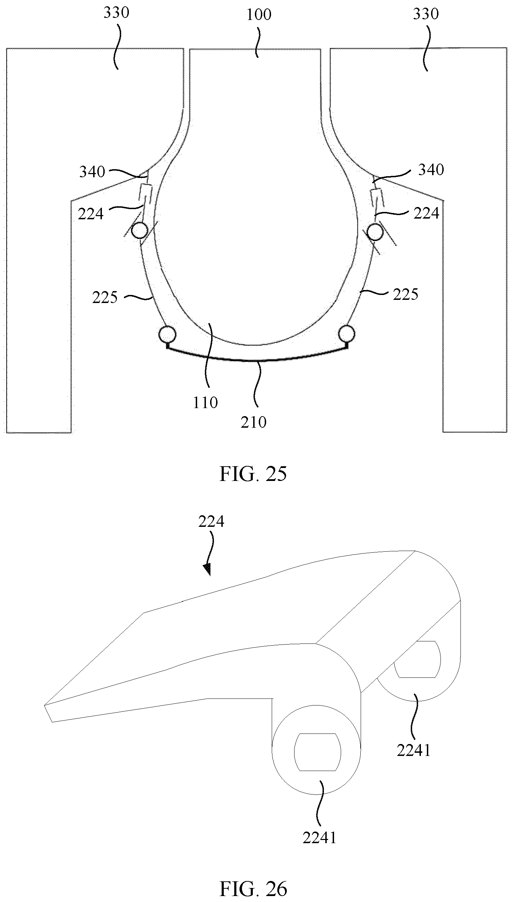

As shown in FIG. 23 and FIG. 26, the sliding swing arm segment 224 has two connection bases 2241, and the two connection bases 2241 are respectively located on two opposite sides of the auxiliary swing arm segment 225. The sliding swing arm segment further includes a connection shaft 700, the auxiliary swing arm segment 225 has a sliding groove 2251, the connection shaft 700 is inserted into the sliding groove 2251, and two ends that are of the connection shaft 700 and that are located outside the sliding groove 2251 are respectively inserted into the two connection bases 2241.

The two connection bases 2241 are respectively disposed on two opposite sides of the auxiliary swing arm segment 225, the sliding swing arm segment 224 is located on the auxiliary swing arm segment 225, and the connection shaft 700 sequentially passes through one connection base 2241, the sliding groove 2251, and the other connection base 2241, to slidably connect the sliding swing arm segment 224 and the auxiliary swing arm segment 225. The auxiliary swing arm segment 225 drives the connection shaft 700 to slide in the sliding groove 2251, to guide sliding of the auxiliary swing arm segment 225 through the sliding groove 2251.

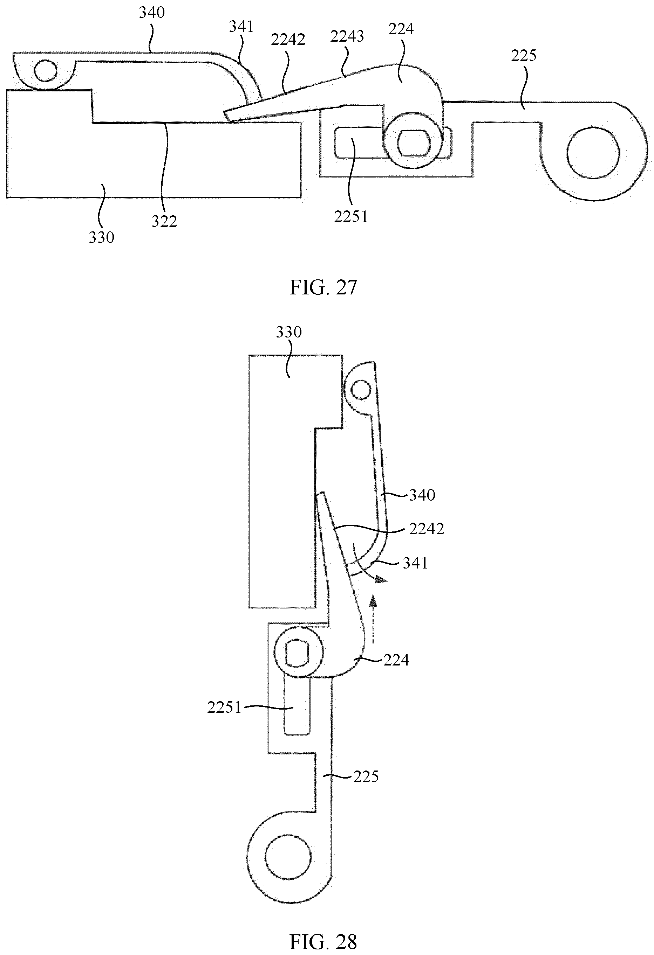

As shown in FIG. 27 and FIG. 28, a side that is of the sliding swing arm segment 224 and that faces the bent portion 341 has an inclined surface segment 2242, and the bent portion 341 is lapped onto the inclined surface segment 2242. The sliding swing arm segment 224 may have a swing arm arc-shaped surface 2243, and the swing arm arc-shaped surface 2243 matches a corresponding position of the water-drop-shaped portion 110.

As shown in FIG. 25 and FIG. 28, during folding, the water-drop-shaped portion 110 applies a force to the sliding swing arm segment 224, so that the sliding swing arm segment 224 moves toward the support plate 340, that is, the sliding swing arm segment 224 moves relative to the auxiliary swing arm segment 225 along a dashed arrow in FIG. 28. Therefore, the support plate 340 is driven to rotate relative to the middle frame body 330 along a solid arrow in FIG. 28. During rotation of the support plate 340, the bent portion 341 moves in an inclined direction of the inclined surface segment 2242, to change the shape of the arc surface enclosed by the middle frame arc-shaped surface and the swing arm 220 (for example, the swing arm arc-shaped surface 2243).

As shown in FIG. 25 and FIG. 27, during unfolding, the middle frame body 330 expands outward, the bent portion 341 and the middle frame connection surface 322 of the middle frame body 330 apply a force to the sliding swing arm segment 224, so that the sliding swing arm segment 224 moves toward the auxiliary swing arm segment 225, thereby forming a state shown in FIG. 27.

The following describes, with reference to a structure of the support door panel 210, a manner in which the swing arm 220 is rotatably connected to the support door panel 210.

As shown in FIG. 9, FIG. 10, FIG. 29, and FIG. 30, the support door panel 210 has at least two arc-shaped sliding grooves 211, the at least two arc-shaped sliding grooves 211 are respectively located on two opposite sides of the support door panel 210, the swing arm 220 has at least one sliding portion 221, the sliding portion 221 is in an arc shape matching the arc-shaped sliding groove 211, the sliding portion 221 is inserted into the arc-shaped sliding groove 211, and the sliding portion 221 rotates relative to the arc-shaped sliding groove 211, so that the swing arm 220 rotates relative to the support door panel 210.

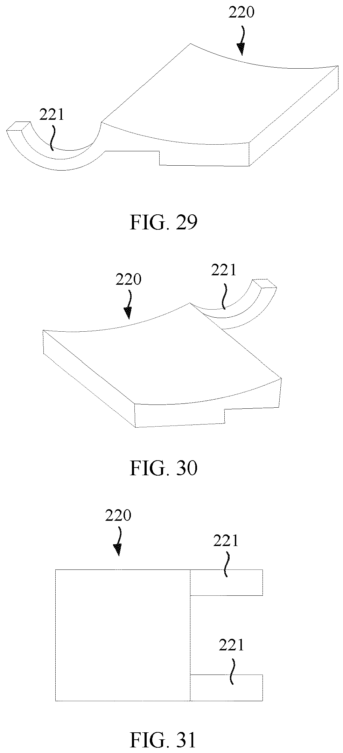

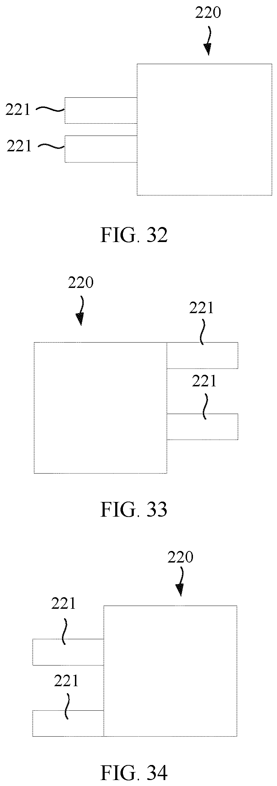

As shown in FIG. 9, FIG. 10, and FIG. 31 to FIG. 34, the swing arm 220 has at least two sliding portions 221, a quantity of arc-shaped sliding grooves 211 is at least four, the sliding portion 221 is inserted into the arc-shaped sliding groove 211 in a one-to-one correspondence, and the sliding portions 221 on the two swing arms 220 that are on the two opposite sides of the support door panel 210 are staggered. For example, the two swing arms 220 may be respectively shown in FIG. 31 and FIG. 32, or the two swing arms 220 may be respectively shown in FIG. 33 and FIG. 34. At least two sliding portions 221 are disposed on each swing arm 220, thereby improving stability of the swing arm 220 rotating relative to the support door panel 210.

As shown in FIG. 9, FIG. 10, FIG. 29, and FIG. 30, in an embodiment, the support door panel 210 may include a first substrate 212 and a second substrate 213. The first substrate 212 is covered on the second substrate 213. The first substrate 212 has at least two arc-shaped protrusions 2121 and at least two accommodating holes 2122. The second substrate 213 has at least two arc-shaped grooves 2131. The arc-shaped grooves 2131 and the arc-shaped protrusions 2121 are in a one-to-one correspondence and are combined to form an arc-shaped sliding groove segment. The arc-shaped sliding groove segment and the accommodating hole 2122 corresponding to the arc-shaped sliding groove segment communicate with each other and jointly form the arc-shaped sliding groove 211.

When the sliding portion 221 on the swing arm 220 is mounted in the arc-shaped sliding groove 211, the sliding portion 221 may be placed in the arc-shaped groove 2131 on the second substrate 213, and then the arc-shaped protrusion 2121 is aligned with the sliding portion 221. An end of the sliding portion 221 is correspondingly inserted into the accommodating hole 2122. The first substrate 212 covers the second substrate 213, and the first substrate 212 is connected to the second substrate 213. The support door panel 210 is provided as a split structure including the first substrate 212 and the second substrate 213, so that it is convenient to process the arc-shaped sliding groove 211 and mount the sliding portion 221 on the swing arm 220 in the arc-shaped sliding groove 211.

In addition, the support door panel 210 may further include a cover plate 216, and the cover plate 216 may be connected to the second substrate 213 through a connector 217. The connector 217 may be a screw, a rivet, or the like.

In the foregoing specific implementations, the objectives, technical solutions, and beneficial effects of this application are further described in detail. It should be understood that the foregoing descriptions are merely specific implementations of this application.

## Claims

1. A foldable electronic device, comprising: a flexible display (100), a foldable apparatus (200), and two middle frames (300), wherein the foldable apparatus (200) comprises a support door panel (210) and two swing arms (220; 220a, 220b), the two swing arms (220; 220a, 220b) are respectively rotatably connected to two opposite sides of the support door panel (210), the two middle frames (300) are correspondingly connected to the two swing arms (220; 220a, 220b), and a side that is of each middle frame (300) and that faces the corresponding swing arm (220; 220a, 220b) has an arc-shaped portion (310);
the flexible display (100) covers the support door panel (210), each swing arm (220; 220a, 220b), and each middle frame (300), and both the middle frames (300) and the swing arms (220; 220a, 220b) rotate relative to the support door panel (210), so that the flexible display (100) is folded or unfolded; and
when folded, the flexible display (100) opposite to the arc-shaped portion (310), the support door panel (210), and each swing arm (220; 220a, 220b) is bent, to form a water-drop-shaped portion (110), and surfaces that face the water-drop-shaped portion (110) and that are of the arc-shaped portion (310), the support door panel (210), and each swing arm (220; 220a, 220b) match corresponding positions of an outer surface of the water-drop-shaped portion (110).

2. The foldable electronic device according to claim 1, wherein each middle frame (300) has a middle frame inner surface (320), and the middle frame inner surface (320) faces the flexible display (100); and
the middle frame inner surface (320) comprises a middle frame support surface (321), a middle frame arc-shaped surface, and a middle frame connection surface (322) that are sequentially disposed, wherein the middle frame arc-shaped surface forms the arc-shaped portion (310), and the middle frame connection surface (322) is connected to the swing arm (220; 220a, 220b).

3. The foldable electronic device according to claim 2, wherein the middle frame inner surface (320) has a support stand (323), the support stand (323) has a support surface and a support side surface located on a side of the support surface, and the support surface forms the middle frame connection surface (322);
wherein the support side surface is in an arc shape, to form the middle frame arc-shaped surface;
wherein each middle frame (300) comprises a middle frame body (330) and a support plate (340), the middle frame body (330) has a mounting groove (331), and the support plate (340) is covered on the middle frame body (330), to close at least a part of the mounting groove (331).

4. The foldable electronic device according to claim 3, wherein a side that is of the support plate (340) and that is away from the middle frame body (330) forms the middle frame support surface (321); and
the support side surface is in an arc shape, to form the middle frame arc-shaped surface.

5. The foldable electronic device according to claim 3, wherein the support plate (340) has an arc-shaped bent portion (341), a side that is of the support plate (340) and that is away from the middle frame body (330) forms the middle frame support surface (321), and a side that is of the arc-shaped bent portion (341) and that is away from the middle frame body (330) forms the middle frame arc-shaped surface;
wherein the arc-shaped bent portion (341) is covered on the support side surface;
wherein the support side surface is in an arc shape matching the arc-shaped bent portion (341).

6. The foldable electronic device according to claim 5, wherein the support plate (340) is rotatably connected to the middle frame body (330), and the arc-shaped bent portion (341) is lapped onto each swing arm (220; 220a, 220b); and each swing arm (220; 220a, 220b) moves relative to the middle frame connection surface (322), to change a shape of an arc surface enclosed by the middle frame arc-shaped surface and the swing arm (220; 220a, 220b).

7. The foldable electronic device according to claim 6, further comprising: a first rotation shaft (500), wherein the support plate (340) is rotatably connected to the middle frame body (330) through the first rotation shaft (500), the first rotation shaft (500) faces an end that is of the support plate (340) and that is away from the arc-shaped bent portion (341), and the first rotation shaft (500) is fixed relative to the middle frame body (330).

8. The foldable electronic device according to claim 6, further comprising: a second rotation shaft (600), wherein the swing arm (220; 220a, 220b) is rotatably connected to the middle frame connection surface (322) through the second rotation shaft (600), and the second rotation shaft (600) is fixed relative to the middle frame body (330).

9. The foldable electronic device according to claim 8, wherein a side that is of each swing arm (220; 220a, 220b) and that faces the middle frame connection surface (322) has a mounting portion (223), the second rotation shaft (600) is inserted into the mounting portion (223), the middle frame connection surface (322) has an accommodating groove (3221), the mounting portion (223) is located in the accommodating groove (3221), and the mounting portion (223) rotates relative to the accommodating groove (3221).

10. The foldable electronic device according to claim 9, wherein the accommodating groove (3221) is in an arc shape, and the mounting portion (223) matches the accommodating groove (3221).

11. The foldable electronic device according to any one of claims 6 to 10, wherein the middle frame connection surface (322) has a limiting groove (3222), and an end that is of each swing arm (220; 220a, 220b) and that faces the arc-shaped bent portion (341) may be embedded into the limiting groove (3222).

12. The foldable electronic device according to claim 7, wherein each swing arm (220; 220a, 220b) comprises a sliding swing arm segment (224) and an auxiliary swing arm segment (225), the sliding swing arm segment (224) is slidably connected to the auxiliary swing arm segment (225), the sliding swing arm segment (224) is lapped on the middle frame connection surface (322), and the auxiliary swing arm segment (225) is rotatably connected to the support door panel (210).

13. The foldable electronic device according to claim 12, wherein the sliding swing arm segment (224) has two connection bases (2241), and the two connection bases (2241) are respectively located on two opposite sides of the auxiliary swing arm segment (225); and
the sliding swing arm segment (224) further comprises a connection shaft (700), the auxiliary swing arm segment (225) has a sliding groove (2251), the connection shaft (700) is inserted into the sliding groove (2251), and two ends that are of the connection shaft (700) and that are located outside the sliding groove (2251) are respectively inserted into the two connection bases (2241).

14. The foldable electronic device according to claim 12 or 13, wherein a side that is of the sliding swing arm segment (224) and that faces the arc-shaped bent portion (341) has an inclined surface segment (2242), and the arc-shaped bent portion (341) is lapped onto the inclined surface segment (2242).

15. The foldable electronic device according to any one of claims 1 to 14, wherein the support door panel (210) has at least two arc-shaped sliding grooves (211), the at least two arc-shaped sliding grooves (211) are respectively located on two opposite sides of the support door panel (210), each swing arm (220; 220a, 220b) has at least one sliding portion (221), the sliding portion (221) is in an arc shape matching the arc-shaped sliding groove (211), the sliding portion (221) is inserted into the arc-shaped sliding groove (211), and the sliding portion (221) rotates relative to the arc-shaped sliding groove (211).

## Patentansprüche

1. Faltbare elektronische Vorrichtung, umfassend: ein flexibles Display (100), eine Faltvorrichtung (200) und zwei Mittelrahmen (300), wobei die Faltvorrichtung (200) eine Stütztürplatte (210) und zwei Schwenkarme (220; 220a, 220b) umfasst, wobei die beiden Schwenkarme (220; 220a, 220b) jeweils drehbar mit zwei gegenüberliegenden Seiten der Stütztürplatte (210) verbunden sind, die beiden Mittelrahmen (300) entsprechend mit den beiden Schwenkarmen (220; 220a, 220b) verbunden sind und eine Seite, die von jedem Mittelrahmen (300) dem entsprechenden Schwenkarm (220; 220a, 220b) zugewandt ist, einen bogenförmigen Abschnitt (310) aufweist;
wobei das flexible Display (100) die Stütztürplatte (210), jeden Schwenkarm (220; 220a, 220b) und jeden Mittelrahmen (300) bedeckt und sowohl die Mittelrahmen (300) als auch die Schwenkarme (220; 220a, 220b) relativ zur Stütztürplatte (210) rotieren, sodass das flexible Display (100) gefaltet oder entfaltet wird; und
wobei im gefalteten Zustand das flexible Display (100) gegenüber dem bogenförmigen Abschnitt (310), der Stütztürplatte (210) und jedem Schwenkarm (220; 220a, 220b) gebogen ist, um einen wassertropfenförmigen Abschnitt (110) zu bilden, und Oberflächen, die dem wassertropfenförmigen Abschnitt (110) zugewandt sind und die vom bogenförmigen Abschnitt (310), der Stütztürplatte (210) und jedem Schwenkarm (220; 220a, 220b) gebildet werden, an entsprechende Positionen einer Außenfläche des wassertropfenförmigen Abschnitts (110) angepasst sind.

2. Faltbare elektronische Vorrichtung nach Anspruch 1, wobei jeder Mittelrahmen (300) eine Mittelrahmen-Innenfläche (320) aufweist und die Mittelrahmen-Innenfläche (320) dem flexiblen Display (100) zugewandt ist; und
die Mittelrahmen-Innenfläche (320) eine Mittelrahmen-Stützfläche (321), eine bogenförmige Mittelrahmen-Oberfläche und eine Mittelrahmen-Verbindungsfläche (322) umfasst, die nacheinander angeordnet sind, wobei die bogenförmige Mittelrahmen-Oberfläche den bogenförmigen Abschnitt (310) bildet und die Mittelrahmen-Verbindungsfläche (322) mit dem Schwenkarm (220; 220a, 220b) verbunden ist.

3. Faltbare elektronische Vorrichtung nach Anspruch 2, wobei die Mittelrahmen-Innenfläche (320) einen Stützsockel (323) aufweist, der Stützsockel (323) eine Stützfläche und eine an einer Seite der Stützfläche angeordnete Stützseitenfläche aufweist und die Stützfläche die Mittelrahmen-Verbindungsfläche (322) bildet;
wobei die Stützseitenfläche bogenförmig ist, um die bogenförmige Mittelrahmen-Oberfläche zu bilden;
wobei jeder Mittelrahmen (300) einen Mittelrahmenkörper (330) und eine Stützplatte (340) umfasst, der Mittelrahmenkörper (330) eine Montagenut (331) aufweist und die Stützplatte (340) auf dem Mittelrahmenkörper (330) bedeckt ist, um zumindest einen Teil der Montagenut (331) zu schließen.

4. Faltbare elektronische Vorrichtung nach Anspruch 3, wobei eine Seite der Stützplatte (340), die vom Mittelrahmenkörper (330) abgewandt ist, die Mittelrahmen-Stützfläche (321) bildet; und
die Stützseitenfläche bogenförmig ist, um die bogenförmige Mittelrahmen-Oberfläche zu bilden.

5. Faltbare elektronische Vorrichtung nach Anspruch 3, wobei die Stützplatte (340) einen bogenförmigen Biegeabschnitt (341) aufweist, eine Seite der Stützplatte (340), die vom Mittelrahmenkörper (330) abgewandt ist, die Mittelrahmen-Stützfläche (321) bildet und eine Seite des bogenförmigen Biegeabschnitts (341), die vom Mittelrahmenkörper (330) abgewandt ist, die bogenförmige Mittelrahmen-Oberfläche bildet;
wobei der bogenförmige Biegeabschnitt (341) auf der Stützseitenfläche abgedeckt ist;
wobei die Stützseitenfläche eine Bogenform aufweist, die dem bogenförmigen Biegeabschnitt (341) entspricht.

6. Faltbare elektronische Vorrichtung nach Anspruch 5, wobei die Stützplatte (340) drehbar mit dem Mittelrahmenkörper (330) verbunden ist und der bogenförmige Biegeabschnitt (341) auf jedem Schwenkarm (220; 220a, 220b) aufliegt; und
jeder Schwenkarm (220; 220a, 220b) sich relativ zur Mittelrahmen-Verbindungsfläche (322) bewegt, um die Form einer Bogenfläche zu verändern, die von der bogenförmigen Mittelrahmen-oberfläche und dem Schwenkarm (220; 220a, 220b) umschlossen wird.

7. Faltbare elektronische Vorrichtung nach Anspruch 6, ferner umfassend: eine erste Rotationswelle (500), wobei die Stützplatte (340) durch die erste Rotationswelle (500) drehbar mit dem Mittelrahmenkörper (330) verbunden ist, die erste Rotationswelle (500) einem Ende der Stützplatte (340) zugewandt ist, das vom bogenförmigen Biegeabschnitt (341) abgewandt ist, und die erste Rotationswelle (500) relativ zum Mittelrahmenkörper (330) fixiert ist.

8. Faltbare elektronische Vorrichtung nach Anspruch 6, ferner umfassend: eine zweite Rotationswelle (600), wobei der Schwenkarm (220; 220a, 220b) durch die zweite Rotationswelle (600) drehbar mit der Mittelrahmen-Verbindungsfläche (322) verbunden ist und die zweite Rotationswelle (600) relativ zum Mittelrahmenkörper (330) fixiert ist.

9. Faltbare elektronische Vorrichtung nach Anspruch 8, wobei eine Seite jedes Schwenkarms (220; 220a, 220b), die der Mittelrahmen-Verbindungsfläche (322) zugewandt ist, einen Montageabschnitt (223) aufweist, die zweite Rotationswelle (600) in den Montageabschnitt (223) eingeführt ist, die Mittelrahmen-Verbindungsfläche (322) eine Aufnahmenut (3221) aufweist, der Montageabschnitt (223) in der Aufnahmenut (3221) angeordnet ist und der Montageabschnitt (223) relativ zur Aufnahmenut (3221) rotiert.

10. Faltbare elektronische Vorrichtung nach Anspruch 9, wobei die Aufnahmenut (3221) bogenförmig ist und der Montageabschnitt (223) zur Aufnahmenut (3221) passt.

11. Faltbare elektronische Vorrichtung nach einem der Ansprüche 6 bis 10, wobei die Mittelrahmen-Verbindungsfläche (322) eine Begrenzungsnut (3222) aufweist und ein Ende jedes Schwenkarms (220; 220a, 220b), das dem bogenförmigen Biegeabschnitt (341) zugewandt ist, in die Begrenzungsnut (3222) eingebettet sein kann.

12. Faltbare elektronische Vorrichtung nach Anspruch 7, wobei jeder Schwenkarm (220; 220a, 220b) ein verschiebbares Schwenkarmsegment (224) und ein Hilfsschwenkarmsegment (225) umfasst, wobei das verschiebbare Schwenkarmsegment (224) verschiebbar mit dem Hilfsschwenkarmsegment (225) verbunden ist, das verschiebbare Schwenkarmsegment (224) auf der Mittelrahmen-Verbindungsfläche (322) aufliegt und das Hilfsschwenkarmsegment (225) drehbar mit der Stütztürplatte (210) verbunden ist.

13. Faltbare elektronische Vorrichtung nach Anspruch 12, wobei das verschiebbare Schwenkarmsegment (224) zwei Verbindungsbasen (2241) aufweist und die beiden Verbindungsbasen (2241) jeweils an zwei gegenüberliegenden Seiten des Hilfsschwenkarmsegments (225) angeordnet sind; und
das verschiebbare Schwenkarmsegment (224) ferner eine Verbindungswelle (700) umfasst, das Hilfsschwenkarmsegment (225) eine Gleitnut (2251) aufweist, die Verbindungswelle (700) in die Gleitnut (2251) eingesetzt ist und zwei Enden der Verbindungswelle (700), die außerhalb der Gleitnut (2251) liegen, jeweils in die beiden Verbindungsbasen (2241) eingesetzt sind.

14. Faltbare elektronische Vorrichtung nach Anspruch 12 oder 13, wobei eine Seite des verschiebbaren Schwenkarmsegments (224), die dem bogenförmigen Biegeabschnitt (341) zugewandt ist, einen geneigten Flächenabschnitt (2242) aufweist und der bogenförmige Biegeabschnitt (341) auf dem geneigten Flächenabschnitt (2242) aufliegt.

15. Faltbare elektronische Vorrichtung nach einem der Ansprüche 1 bis 14, wobei die Stütztürplatte (210) mindestens zwei bogenförmige Gleitnuten (211) aufweist, die mindestens zwei bogenförmigen Gleitnuten (211) jeweils an zwei gegenüberliegenden Seiten der Stütztürplatte (210) angeordnet sind, jeder Schwenkarm (220; 220a, 220b) mindestens einen Gleitabschnitt (221) aufweist, der Gleitabschnitt (221) eine Bogenform aufweist, die zur bogenförmigen Gleitnut (211) passt, der Gleitabschnitt (221) in die bogenförmige Gleitnut (211) eingesetzt ist und der Gleitabschnitt (221) relativ zur bogenförmigen Gleitnut (211) rotiert.

## Revendications

1. Dispositif électronique pliable, comprenant : un écran flexible (100), un appareil pliable (200), et deux cadres intermédiaires (300), dans lequel l'appareil pliable (200) comprend un panneau de porte de support (210) et deux bras oscillants (220 ; 220a, 220b), les deux bras oscillants (220 ; 220a, 220b) sont respectivement connectés de manière rotative à deux côtés opposés du panneau de porte de support (210), les deux cadres intermédiaires (300) sont connectés de manière correspondante aux deux bras oscillants (220 ; 220a, 220b), et un côté qui est de chaque cadre intermédiaire (300) et qui fait face au bras oscillant correspondant (220 ; 220a, 220b) comporte une partie en forme d'arc (310) ;
l'écran flexible (100) recouvre le panneau de porte de support (210), chaque bras oscillant (220 ; 220a, 220b), et chaque cadre intermédiaire (300), et à la fois les cadres intermédiaires (300) et les bras oscillants (220 ; 220a, 220b) pivotent par rapport au panneau de porte de support (210), de sorte que l'écran flexible (100) soit plié ou déplié ; et
une fois plié, l'écran flexible (100) opposé à la partie en forme d'arc (310), au panneau de porte de support (210), et à chaque bras oscillant (220 ; 220a, 220b) est courbé, pour former une partie en forme de goutte d'eau (110), et les surfaces qui font face à la partie en forme de goutte d'eau (110) et qui appartiennent à la partie en forme d'arc (310), au panneau de porte de support (210), et à chaque bras oscillant (220 ; 220a, 220b) épousent des positions correspondantes d'une surface extérieure de la partie en forme de goutte d'eau (110).

2. Dispositif électronique pliable selon la revendication 1, dans lequel chaque cadre intermédiaire (300) comporte une surface intérieure de cadre intermédiaire (320), et la surface intérieure de cadre intermédiaire (320) fait face à l'écran flexible (100) ; et
la surface intérieure de cadre intermédiaire (320) comprend une surface de support de cadre intermédiaire (321), une surface arquée de cadre intermédiaire, et une surface de connexion de cadre intermédiaire (322) qui sont disposées séquentiellement, dans lequel la surface arquée de cadre intermédiaire forme la partie en forme d'arc (310), et la surface de connexion de cadre intermédiaire (322) est connectée au bras oscillant (220 ; 220a, 220b).

3. Dispositif électronique pliable selon la revendication 2, dans lequel la surface intérieure de cadre intermédiaire (320) comporte un support de support (323), le support de support (323) comporte une surface de support et une surface latérale de support située sur un côté de la surface de support, et la surface de support forme la surface de connexion de cadre intermédiaire (322) ;
dans lequel la surface latérale de support est en forme d'arc, pour former la surface arquée de cadre intermédiaire ;
dans lequel chaque cadre intermédiaire (300) comprend un corps de cadre intermédiaire (330) et une plaque de support (340), le corps de cadre intermédiaire (330) comporte une rainure de montage (331), et la plaque de support (340) est recouverte sur le corps de cadre intermédiaire (330), pour fermer au moins une partie de la rainure de montage (331).

4. Dispositif électronique pliable selon la revendication 3, dans lequel un côté de la plaque de support (340) qui est éloigné du corps de cadre intermédiaire (330) forme la surface de support de cadre intermédiaire (321) ; et
la surface latérale de support est de forme arquée, pour former la surface arquée de cadre intermédiaire.

5. Dispositif électronique pliable selon la revendication 3, dans lequel la plaque de support (340) présente une partie pliée arquée (341), un côté de la plaque de support (340) qui est éloigné du corps de cadre intermédiaire (330) forme la surface de support de cadre intermédiaire (321), et un côté de la partie pliée arquée (341) qui est éloigné du corps de cadre intermédiaire (330) forme la surface arquée de cadre intermédiaire ;
dans lequel la partie pliée arquée (341) est recouverte sur la surface latérale de support ;
dans lequel la surface latérale de support est de forme arquée correspondant à la partie pliée arquée (341).

6. Dispositif électronique pliable selon la revendication 5, dans lequel la plaque de support (340) est reliée de manière rotative au corps de cadre intermédiaire (330), et la partie pliée arquée (341) est en appui sur chaque bras oscillant (220 ; 220a, 220b) ; et
chaque bras oscillant (220 ; 220a, 220b) se déplace par rapport à la surface de connexion de cadre intermédiaire (322), pour modifier une forme d'une surface arquée délimitée par la surface arquée de cadre intermédiaire et le bras oscillant (220 ; 220a, 220b).

7. Dispositif électronique pliable selon la revendication 6, comprenant en outre : un premier axe de rotation (500), dans lequel la plaque de support (340) est reliée de manière rotative au corps de cadre intermédiaire (330) par le premier axe de rotation (500), le premier axe de rotation (500) fait face à une extrémité de la plaque de support (340) qui est éloignée de la partie pliée arquée (341), et le premier axe de rotation (500) est fixe par rapport au corps de cadre intermédiaire (330).

8. Dispositif électronique pliable selon la revendication 6, comprenant en outre : un second axe de rotation (600), dans lequel le bras oscillant (220 ; 220a, 220b) est relié de manière rotative à la surface de connexion de cadre intermédiaire (322) par le second axe de rotation (600), et le second axe de rotation (600) est fixe par rapport au corps de cadre intermédiaire (330).

9. Dispositif électronique pliable selon la revendication 8, dans lequel un côté de chaque bras oscillant (220 ; 220a, 220b) qui fait face à la surface de connexion de cadre intermédiaire (322) présente une partie de montage (223), le second axe de rotation (600) est inséré dans la partie de montage (223), la surface de connexion de cadre intermédiaire (322) présente une rainure de réception (3221), la partie de montage (223) est située dans la rainure de réception (3221), et la partie de montage (223) tourne par rapport à la rainure de réception (3221).

10. Dispositif électronique pliable selon la revendication 9, dans lequel la rainure de réception (3221) est en forme d'arc, et la partie de montage (223) correspond à la rainure de réception (3221).

11. Dispositif électronique pliable selon l'une quelconque des revendications 6 à 10, dans lequel la surface de connexion du cadre intermédiaire (322) présente une rainure de limitation (3222), et une extrémité de chaque bras oscillant (220 ; 220a, 220b) faisant face à la partie courbée en arc (341) peut être encastrée dans la rainure de limitation (3222).

12. Dispositif électronique pliable selon la revendication 7, dans lequel chaque bras oscillant (220 ; 220a, 220b) comprend un segment de bras oscillant coulissant (224) et un segment de bras oscillant auxiliaire (225), le segment de bras oscillant coulissant (224) est connecté de manière coulissante au segment de bras oscillant auxiliaire (225), le segment de bras oscillant coulissant (224) est superposé sur la surface de connexion du cadre intermédiaire (322), et le segment de bras oscillant auxiliaire (225) est connecté de manière rotative au panneau de support (210).

13. Dispositif électronique pliable selon la revendication 12, dans lequel le segment de bras oscillant coulissant (224) possède deux bases de connexion (2241), et les deux bases de connexion (2241) sont respectivement situées sur deux côtés opposés du segment de bras oscillant auxiliaire (225) ; et
le segment de bras oscillant coulissant (224) comprend en outre un axe de connexion (700), le segment de bras oscillant auxiliaire (225) possède une rainure coulissante (2251), l'axe de connexion (700) est inséré dans la rainure coulissante (2251), et deux extrémités de l'axe de connexion (700) situées à l'extérieur de la rainure coulissante (2251) sont respectivement insérées dans les deux bases de connexion (2241).

14. Dispositif électronique pliable selon la revendication 12 ou 13, dans lequel un côté du segment de bras oscillant coulissant (224) faisant face à la partie courbée en arc (341) présente un segment de surface inclinée (2242), et la partie courbée en arc (341) est superposée sur le segment de surface inclinée (2242).

15. Dispositif électronique pliable selon l'une quelconque des revendications 1 à 14, dans lequel le panneau de support (210) présente au moins deux rainures coulissantes en arc (211), les au moins deux rainures coulissantes en arc (211) sont respectivement situées sur deux côtés opposés du panneau de support (210), chaque bras oscillant (220 ; 220a, 220b) possède au moins une partie coulissante (221), la partie coulissante (221) est en forme d'arc correspondant à la rainure coulissante en arc (211), la partie coulissante (221) est insérée dans la rainure coulissante en arc (211), et la partie coulissante (221) tourne par rapport à la rainure coulissante en arc (211).
